# EUROPEAN PATENT APPLICATION

(11) **EP 3 779 262 A1**
(43) Date of publication of application: **17.02.2021**
(21) Application number: 18911730.2
(22) Date of filing: 28.03.2018
(51) Int. Cl.: F16M 13/04, F16M 11/12, F16M 11/18, B64D 47/08

(54) **DIFFERENTIAL GEAR DRIVE APPARATUS, STABILIZING MECHANISM, PAN-TILT APPARATUS, AND PHOTOGRAPHY DEVICE**

(71) Applicant: SZ DJI Technology Co., Ltd., Shenzhen, Guangdong 518057 (CN)
(72) Inventor: LIU, Sicong, Shenzhen, Guangdong 518057 (CN); GUO, Shanguang, Shenzhen, Guangdong 518057 (CN); YE, Fangming, Shenzhen, Guangdong 518057 (CN)
(74) Representative: Appelt, Christian W.
(86) International application number: PCT/CN2018/080772
(87) International publication number: WO 2019/183822

(57) **Abstract**

The present disclosure relates to a differential gear drive device, a stabilization mechanism, a gimbal device, and an image capturing device. The stabilization mechanism includes a differential gear set, a first motor, a second motor, and a movement conversion assembly. The differential gear set includes a first side gear and a second side gear disposed opposite to each other, and a first planetary gear meshing with the first side gear and the second side gear. The first motor is connected to the first side gear, and the second motor is connected to the second side gear. The first planetary gear can rotate on its own or revolve around the first side gear and the second side gear. The movement conversion assembly is connected between a payload and the first planetary gear for converting a revolution movement of the first planetary gear into a movement of the payload in a first direction, and converting a rotation movement of the first planetary gear into the movement of the payload in a second direction.

## Description

### TECHNICAL FIELD

The present disclosure relates to the field of imaging and, more specifically, to a differential gear drive device, a stabilization mechanism, a gimbal device, and an image capturing device.

### BACKGROUND

In order to achieve a stable imaging process, many imaging devices are used with a gimbal device. The gimbal device generally has the function of stabilizing the imaging device in the rotation direction. For example, a three-axis gimbal can compensate the jitter of the imaging device in the rotation direction of the pitch axis, the yaw axis, and the roll axis. However, the gimbal device does not have an ideal stabilization function for the jitter of the imaging device in the gravitational direction or in the horizontal direction.

### SUMMARY

The present disclosure provides a differential gear drive device, a stabilization mechanism, a gimbal device, and an image capturing device.

A first aspect of the embodiments of the present disclosure provides a differential gear drive device. The differential gear drive device includes a differential gear set, a first motor, a second motor, and a slider-crank assembly. The differential gear set includes a first side gear and a second side gear disposed opposite to each other, and a first planetary gear meshing with the first side gear and the second side gear. The first motor is connected to the first side gear, and the second motor is connected to the second side gear. The first planetary gear can rotate on its own or revolve around the first side gear and the second side gear. The slider-crank assembly includes a crank, a connecting rod, and a sliding block. Both ends of the connecting rod are hinged with the crank and the sliding block respectively, and the crank is connected with the first planetary gear. By using the differential gear drive device of the present disclosure, the revolution and rotation of the first planetary gear can be converted into a first direction and a second direction of a payload, which is beneficial to the stability of the payload in the first and second directions.

A second aspect of the embodiments of the present disclosure provides a stabilization mechanism. The stabilization mechanism includes the differential gear drive device as described in the first aspect of the present disclosure and a payload assembly. The differential gear drive device is connected to the payload assembly for driving the payload assembly. By using the stabilization mechanism of the present disclosure, the revolution and rotation of the first planetary gear can be converted into a first direction and a second direction of a payload, which is beneficial to the stability of the payload in the first and second directions.

A third aspect of the embodiments of the present disclosure provides a stabilization mechanism. The stabilization mechanism is used to support a payload, and includes a differential gear set, a first motor, a second motor, and a movement conversion assembly. The differential gear set includes a first side gear and a second side gear disposed opposite to each other, and a first planetary gear meshing with the first side gear and the second side gear. The first motor is connected to the first side gear, and the second motor is connected to the second side gear. The first planetary gear can rotate on its own or revolve around the first side gear and the second side gear. The movement conversion assembly is connected between the payload and the first planetary gear for converting a revolution movement of the first planetary gear into a movement of the payload in a first direction, and converting a rotation movement of the first planetary gear into the movement of the payload in a second direction. By using the stabilization mechanism of the present disclosure, the revolution and rotation of the first planetary gear can be converted into the first direction and the second direction of the payload, which is beneficial to the stability of the payload in the first and second directions.

A fourth aspect of the embodiments of the present disclosure provides a gimbal device. The gimbal device includes the stabilization mechanism as described in the second aspect or third aspect of the present disclosure. By using the gimbal device of the present disclosure, the revolution and rotation of the first planetary gear can be converted into the first direction and the second direction of the payload, which is beneficial to the stability of the payload in the first and second directions.

A fifth aspect of the embodiments of the present disclosure provides an image capturing device. The image capturing device includes an imaging device and the gimbal device as described in the fourth aspect of the present disclosure. By using the image capturing device of the present disclosure, the revolution and rotation of the first planetary gear can be converted into the first direction and the second direction of the payload, which is beneficial to the stability of the payload in the first and second directions.

### BRIEF DESCRIPTION OF THE DRAWINGS

In order to illustrate the technical solutions in accordance with the embodiments of the present disclosure more clearly, the accompanying drawings to be used for describing the embodiments are introduced briefly in the following. It is apparent that the accompanying drawings in the following description are only some embodiments of the present disclosure. Persons of ordinary skill in the art can obtain other accompanying drawings in accordance with the accompanying drawings without any creative efforts.
FIG. 1 is a schematic diagram of a module structure of an imaging capturing device according to an embodiment of the present disclosure.
FIGs. 2-4 are structural schematic diagrams of a stabilization mechanism according to an embodiment of the present disclosure, where FIG. 2 is a perspective view of the stabilization mechanism, FIG. 3 is a top view of the stabilization mechanism, and FIG. 4 is a perspective view of some components of the stabilization mechanism.

### DETAILED DESCRIPTION OF THE EMBODIMENTS

Technical solutions of the present disclosure will be described in detail with reference to the drawings. It will be appreciated that the described embodiments represent some, rather than all, of the embodiments of the present disclosure. Other embodiments conceived or derived by those having ordinary skills in the art based on the described embodiments without inventive efforts should fall within the scope of the present disclosure.

Exemplary embodiments will be described in detail, with the examples shown in the accompanying drawings. When the following descriptions refer to the drawings, unless otherwise expressed, the same numbers in different drawings refer to the same or similar elements. The implementation methods described in the following embodiments do not represent all of the implementation methods consistent with the present disclosure. Instead, they are merely examples of the device and method described in detail in the accompanying claims that are consistent with certain aspects of the present disclosure.

The terms used in the following descriptions are only for the purpose of describing specific embodiments, and are not intended to limit the scope of the present disclosure. In addition, the singular forms "a," "an," and "the" are intended to include the plural forms as well, unless the context indicates otherwise. It should also be understood that the term "and/or" used herein includes any suitable combination of one or more related items listed.

Embodiments of the present disclosure will be described in detail with reference to the drawings. Various embodiments and features in the embodiments may be combined when there is no obvious conflict.

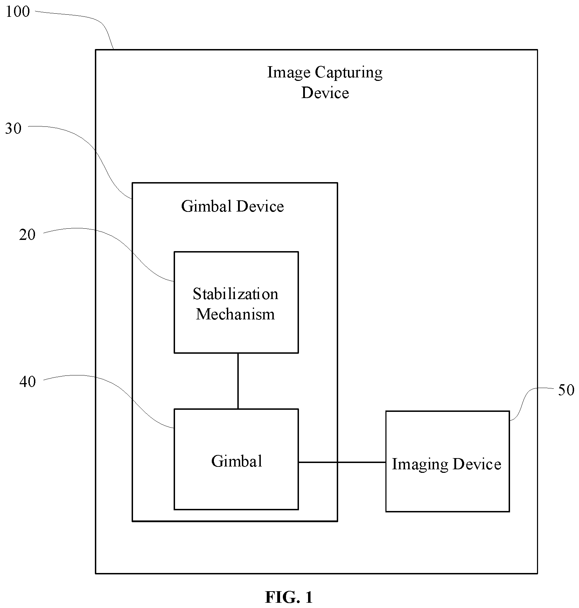

As shown in FIG. 1, an imaging capturing device 100 in the embodiment of the present disclosure can include a gimbal device 30 and an imaging device 50. The gimbal device 30 can be used to support the imaging device 50, and can be used to change the imaging angle of the imaging device 50 and eliminate the influence of jitter on the imaging device 50.

The imaging device 50 can be used to capture images/videos, and can be a camera, a video camera, or a mobile phone or tablet computer with a camera function.

The gimbal device 30 may include a stabilization mechanism 20 and a gimbal 40. The gimbal 40 can be mounted on the stabilization mechanism 20. The imaging device 50 may be mounted on the gimbal 40. The gimbal 40 may be a three-axis gimbal, which can adjust the angle of the imaging device 50 around a yaw axis, a roll axis, and a pitch axis.

It should be understood that the gimbal 40 may also be a single-axis gimbal, a dual-axis gimbal, or other types of gimbal.

The gimbal device 30 may include a sensor (not shown in FIG. 1) and a controller (not shown in FIG. 1). The sensor can be used to sense the attitude information of the gimbal 40. More specifically, the sensor may include an inertial measurement unit (IMU) for measuring the attitude of the gimbal 40, including the angular velocity of each rotation axis of the gimbal 40 and the acceleration at the imaging device. The sensor may also include a photoelectric encoder for measuring the rotation angle of each rotating shaft of the gimbal 40, which is not limited here. The controller can be used to control the gimbal 40 to drive the imaging device 50 to rotate around the yaw axis, the roll axis, and/or the pitch axis based on the attitude information sensed by the sensor, thereby eliminating the influence of the spatial jittering of the image capturing device 100 on the imaging device 50.

It should be understood that the controller may also control the gimbal 40 to drive the imaging device 50 to rotate around the yaw axis, the roll axis, and/or the pitch axis in response to the user's instruction information to obtain the user's desired imaging angle/direction.

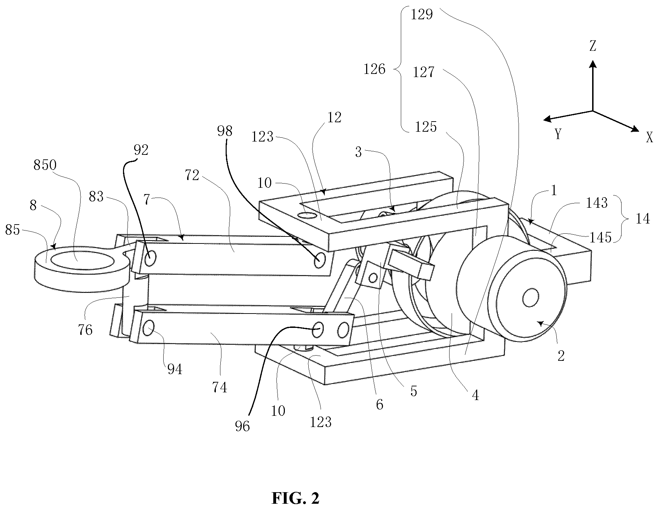

In this embodiment, the stabilization mechanism 20 can be used to support the gimbal 40 and the imaging device 50, and can be used to eliminate the jitter of the imaging device 50 in a first direction and a second direction. In one embodiment, the first direction may be a vertical direction, parallel to the Z direction in FIG. 2; and the second direction may be a horizontal direction. The plane defined by the X direction and the Y direction in FIG. 2 is a horizontal plane, and the second direction may be in the horizontal plane. The gimbal 40 and the imaging device 50 can be collectively referred to as a payload.

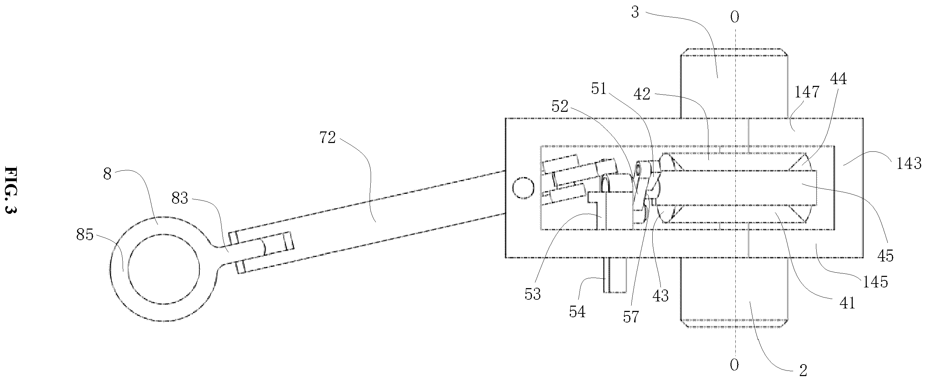

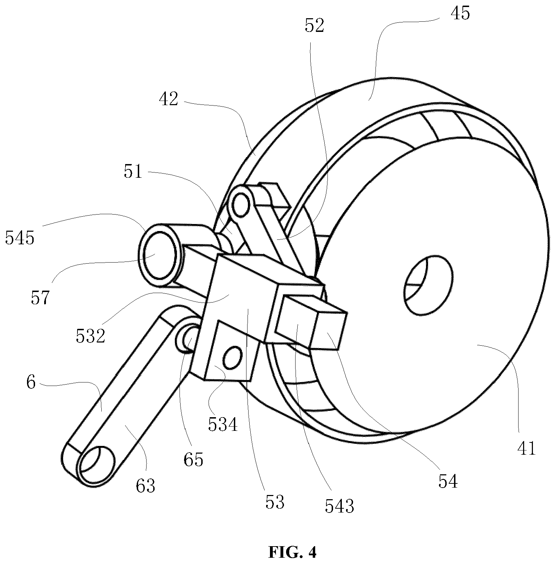

As shown in FIGs. 2-4, the stabilization mechanism 20 includes a differential gear set 4, a first motor 2, a second motor 3, and a movement conversion assembly. The differential gear set 4 includes a first side gear 41 and a second side gear 42 disposed opposite to each other, and a first planetary gear 43 meshing with the first side gear 41 and the second side gear 42. The first motor 2 is connected to the first side gear 41 and can drive the first side gear 41 to rotate. The second motor 3 is connected to the second side gear 42 and can drive the second side gear 42 to rotate.

It should be noted that "object A being connected to object B" mentioned here can include many situations, such as when the object A and the object B are integrally formed, and when the object A and the object B are connected in a detachable manner.

When the first side gear 41 and the second side gear 42 rotate synchronously, the first planetary gear 43 may revolve around the axis of the first side gear 41 and the second side gear 42. When the first side gear 41 and the second side gear 42 rotate at a differential speed, the first planetary gear 43 may revolve around the axis of the first side gear 41 and the second side gear 42, and also rotate on its own axis. That is, the rotation of the first side gear 41 and the second side gear 42 can realize the revolution of the first planetary gear 43 around the first side gear 41 and the second side gear 42, or at the same time, realize the rotation movement and the revolution around the first side gear 41 and the second side gear 42.

The movement conversion assembly may be an assembly connected between the payload and the first planetary gear 43, which can be used to convert the revolution movement of the first planetary gear 43 into the movement of the payload in the first direction and convert the rotation movement of the first planetary gear 43 into the movement of the payload in the second direction.

This allows the stabilization mechanism 20 to be used to eliminate the jitter of the payload in the first direction and the second direction. In order to eliminate the jitter in the first direction, the jitter amplitude of the payload in the first direction can be obtained based on the attitude information of the payload sensed by the sensor, thereby controlling and driving the first planetary gear 43 to make a corresponding revolution, and then driving the payload to perform a compensation movement in the first direction in an opposite direction corresponding to the above-mentioned jitter. In order to eliminate the jitter in the second direction, similarly, based on the jitter amplitude of the payload in the second direction, the first planetary gear 43 can be controlled to drive the first planetary gear 43 to rotate in a corresponding amplitude, and then drive the payload to perform a compensation movement in the second direction in an opposite direction corresponding to the above-mentioned jitter.

It should be noted that the jitter in the first second or the second direction mentioned here generally refers to jitter with a component in the first direction or the second direction. That is, as long as the jitter of the payload has a component in the first direction or the second direction, it can be referred to the jitter in the first direction or the second direction.

The differential gear set 4 may further include a second planetary gear 44 meshing with the first side gear 41 and the second side gear 42. The second planetary gear 44 and the first planetary gear 43 may be positioned on both sides of the first side gear 41 (or the second side gear 42), respectively. In addition, the differential gear set 4 may further include a gear holder 45. The gear holder 45 may have a ring shape, and may be disposed along the revolution direction of the first planetary gear 43 and the second planetary gear 44. The first planetary gear 43 and the second planetary gear 44 may be disposed on the gear holder 45, and be held relative to each other by the gear holder 45.

In the illustrated embodiment, the movement conversion assembly further includes a slider-crank assembly 5, a four-bar linkage mechanism 7, and a connecting assembly 6. The stabilization mechanism may further include a frame 1. The differential gear set 4, the first motor 2, the second motor 3, and the four-bar linkage mechanism 7 may be all mounted on the frame 1.

In the illustrated embodiment, the frame 1 includes a rack 12. The rack 12 can be formed by connecting a plurality of rods, and may have a cuboid shape. It should be understood that the rack 12 can be used to connect and support the stabilization mechanism 20, may also be partially triangular, arc-shaped, or have other shapes. The rack 12 may include a plurality of connecting rods, bending rods, or other connecting part, which are not limited here. In this embodiment, the rack 12 may include two plane racks 126 disposed opposite to each other and a connecting beam 123 connecting the two plane racks 126. Each plane rack 126 may include a vertical rod, and a first horizontal rod 125 and a second horizontal rod 129 respectively connected to both ends of the vertical rod 127. The first horizontal rod 125 of the two plane racks 126 may be connected by one connecting beam 123, and the second horizontal rod 129 of the two plane racks 126 may be connected by another connecting beam 123. The differential gear set 4 and the slider-crank assembly 5 may be disposed between the two plane racks 126.

The first side gear 41, the second side gear 42, the first motor 2, and the second motor 3 may be mounted on the vertical rod 127. For example, mounting holes (not shown in FIG. 2) may be arranged on each vertical rod 127. The output shafts of the first motor 2 and the second motor 3 can pass through the mounting holes and be connected to the rotating shafts of the first side gear 41 and the second side gear 42.

The frame 1 may also include a plane connecting rack 14. In this embodiment, the plane connecting rack 14 may include a first rod 145 and a second rod 147 disposed opposite to the first rod 145, and an intermediate rod 143 connected between the first rod 145 and the second rod 147. The first rod 145 and the second rod 147 may be connected to the vertical rods 127 of different plane racks 126, and may be connected at the middle position of the vertical rod 127. It should be understood that the plane connecting rack 14 may be used together with the rack 12 to surround the differential gear set 4. The plane connecting rack 14 may also be arc-shaped, semicircular-shaped, or other shapes, which is not limited here.

The slider-crank assembly 5 may include a crack 51, a connecting rod 52, and a sliding block 53. The two ends of the connecting rod 52 may be respectively hinged with the crank 51 and the sliding block 53. One end of the crank 51 may be connected with the first planetary gear 43, and the other end may be hinged with one end of the connecting rod 52. The sliding block 53 may be hinged to the other end of the connecting rod 52. As such, the rotation of the first planetary gear 43 can drive the crank 51 to rotate and pull the connecting rod 52, thereby driving the sliding block 53 to slide. The sliding direction of the sliding block 53 may be restricted by a sliding rod 54 sleeved in a sliding block 43, and can be parallel to the rotation axis direction O-O of the first side gear 41 and the second side gear 42.

In the illustrated embodiment, the crank is fixed on a rotating shaft 57 of the first planetary gear 43. The slider-crank assembly 5 may also include a sliding rod 54 cooperating with the sliding block 53, and the sliding rod 54 may be sleeved in the sliding block 53. It should be understood that the sliding rod 54 can be used to restrict the sliding direction of the sliding block 53. The sliding rod 54 may be in the form of being half-enclosed by the sliding block 53, or the sliding block 53 may be disposed in a long groove on one side of the sliding rod 54, which is not limited here, as long as the sliding block 53 and the sliding rod 54 can form a moving pair. The sliding rod 54 may include a rod 543 and an end 545. The end 545 of the sliding rod 54 may be sleeved on the rotating shaft 57, such that the rotating shaft 57 can rotate relative to the sliding rod 54. The sliding block 53 may include a nesting part 532 nested on the rod 543 of the sliding rod 54, and a plate-shaped part 534 disposed under the nesting part 532 and connected to the nesting part 532.

The four-bar linkage mechanism 7 may be a double rocker mechanism, including a first rocker 72, a second rocker 74, and a mounting rod 76. The mounting rod 76 can be used for mounting and supporting the payload. The two ends of the mounting rod 76 may be respectively hinged with the first rocker 72 and the second rocker 74, and the hinge point may be 92 and 94, respectively.

One end of the first rocker 72 may be hinged with the mounting rod 76, the other end may be spherically hinged with the connecting beam 123, and the hinge point on the first rocker 72 may be 92 and 98, respectively. For example, a hinge rod 10 may be disposed between the connecting beam 123 and the first rocker 72. One end of the hinge rod 10 may be hinged with the first rocker 72, and the other end may be spherically hinged with the connecting beam 123. Alternatively, one end of the hinge rod 10 may be spherically hinged with the first rocker 72, and the other end may be hinged with the connecting beam 123.

One end of the second rocker 74 may be hinged with the mounting rod 76, the other end may be spherically hinged with another connecting beam 123, and the hinge point on the second rocker 74 may be 94 and 96, respectively. For example, the hinge rod 10 may be disposed between the connecting beam 123 and the second rocker 74. One end of the hinge rod 10 may be hinged with the second rocker 74, and the other end may be spherically hinged with the connecting beam 123. Alternatively, one end of the hinge rod 10 may be spherically hinged with the second rocker 74, and the other end may be hinged with the connecting beam 123.

The length of the first rocker 72 and the second rocker 74 may be the same (the distance between the hinge point 92 and the hinge point 98 may be equal to the distance between the hinge point 94 and the hinge point 96), and the first rocker 72 and the second rocker 74 may be kept parallel during the movement. During the movement, the mounting rod 76 may be kept in the vertical direction.

The movement conversion assembly may further include a mounting base 8 for mounting the payload. The mounting base 8 may be fixed on the mounting rod 76. The mounting base 8 may include an annular mounting part 85 and a connecting part 83 connected between the mounting rod 76 and the mounting part 85. A circular gap 850 may be arranged in the mounting part 85. The gimbal 40 may be mounted on the mounting part 85.

The connecting assembly 6 may include a first connecting rod 63 and a second connecting rod 65. The first connecting rod 63 may be hinged to the first rocker 72 or the second rocker 74 of the four-bar linkage mechanism 7. One end of the second connecting rod 65 may be rotatably connected (hinged) with the sliding block 53, and the other end may be spherically hinged with the first connecting rod 63. The function of the spherical hinge connection between the second connecting rod 65 and the first connecting rod 63 is to eliminate the displacement in the Y direction caused by the swing of the first connecting rod 63. More specifically, when the stabilization mechanism as a whole achieves stabilization in the second direction and does not move in the first direction, the sliding rod 54 may not move at this time to ensure the stability of the payload in the vertical direction, and the sliding block 53 may slide on the sliding rod 54 to achieve the stability on the second direction. Since the second connecting rod 65 can be rotatably connected with the sliding block 53, the first connecting rod 63 can be driven by the second connecting rod 65 to further drive the second rocker 74 to rotate around the hinge rod 10. Since the payload remains stable in the first direction, the second rocker 74 may not rotate around the hinge point 96, and the end of the first connecting rod 63 connected to the second connecting rod 65 may be displaced in the Y direction due to the swing of the first connecting rod 63 around the hinge rod 10. The function of the spherical hinge connection between the second connecting rod 65 and the first connecting rod 63 is to eliminate this displacement. It should be understood that the spherical hinge connection may also be disposed at the connection of the second connecting rod 65 and the plate-shaped part 534 of the sliding block 53. That is, the rotational connection of one end of the second connecting rod 65 with the sliding block 53 and the spherical hinge connection of the other end of the second connecting rod 65 with the first connecting rod 63 may be exchanged.

When the first side gear 41 and the second side gear 42 rotate synchronously, the first planetary gear 43 revolves around the first side gear 41 and the second side gear 42, the slider-crank assembly 5 may move synchronously with the first planetary gear 43. Due to the conversion effect of the connecting assembly 6, the first rocker 72 and the second rocker 74 may rotate vertically around the hinge points 98 and 96 respectively, and the mounting rod 76 and the payload may move in the first direction (the vertical direction).

When the first side gear 41 and the second side gear 42 rotate at a differential speed and the first planetary gear 43 rotates, the slider-crank assembly 5 may convert the rotation of the first planetary gear 43 into the sliding of the sliding block 53. Driven by the connecting assembly 6, the first rocker 72 and the second rocker 74 can rotate left and right in the horizontal direction around the hinge points 98 and 96 respectively, and the mounting rod 76 and the payload may move in the second direction (the horizontal direction).

In the illustrated embodiment, the connecting assembly 6, the four-bar linkage mechanism 7, the mounting base 8, and the payload can be collectively referred to as a payload assembly. The four-bar linkage mechanism 7 and the mounting base 8 in the payload assembly, especially the four-bar linkage mechanism 7, can facilitate the stability state when the payload is moving (in the first direction or the second direction). The differential gear set 4, the first motor 2, the second motor 3, the slider-crank assembly 5, etc. can be collectively referred to as a differential gear drive device, which is mainly used to drive the payload assembly to move.

It should be understood that, in addition to the slider-crank assembly 5, the connecting assembly 6, and the four-bar linkage mechanism 7, in other embodiments, other types of movement conversion assembly may also be used to convert the two rotations (revolution and rotation) of the first planetary gear 43 in the differential gear set 4 into the vertical and horizontal movements of the payload, respectively.

It should be noted that in the present disclosure, relational terms such as first and second, etc., are only used to distinguish an entity or operation from another entity or operation, and do not necessarily imply that there is an actual relationship or order between the entities or operations. The terms "comprising," "including," or any other variations are intended to encompass non-exclusive inclusion, such that a process, a method, an apparatus, or a device having a plurality of listed items not only includes these items, but also includes other items that are not listed, or includes items inherent in the process, method, apparatus, or device. Without further limitations, an item modified by a term "comprising a ..." does not exclude inclusion of another same item in the process, method, apparatus, or device that includes the item.

Other embodiments of the present disclosure will be apparent to those skilled in the art from consideration of the specification and practice of the embodiments disclosed herein. It is intended that the specification and examples be considered as example only and not to limit the scope of the present disclosure, with a true scope and spirit of the invention being indicated by the following claims. Variations or equivalents derived from the disclosed embodiments also fall within the scope of the present disclosure.

## Claims

1. A differential gear drive device, comprising:
a differential gear set including a first side gear and a second side gear disposed opposite to each other, and a first planetary gear meshing with the first side gear and the second side gear, the first planetary gear being capable of rotating on its own and revolving around the first side gear and the second side gear;
a first motor connected to the first side gear;
a second motor connected to the second side gear; and
a slider-crank assembly including a crank, a connecting rod, and a sliding block, both ends of the connecting rod being hinged with the crank and the sliding block respectively, and the crank being connected with the first planetary gear.

2. The differential gear drive device of claim 1, wherein:
a sliding direction of the sliding block is parallel to a rotation axis direction of the first side gear and the second side gear.

3. The differential gear drive device of claim 1, wherein:
the crank is fixed on a rotating shaft of the first planetary gear;
the slider-crank assembly further includes a sliding rod cooperating with the sliding block, and an end of the sliding rod is sleeved on the rotating shaft.

4. The differential gear drive device of claim 1, wherein:
the differential gear set further includes a second planetary gear meshing with the first side gear and the second side gear.

5. A stabilization mechanism, comprising:
the differential gear drive device according to any one of claims 1-4; and
a payload assembly, the differential gear drive device being connected to the payload assembly for driving the payload assembly.

6. The stabilization mechanism of claim 5, wherein:
the payload assembly includes a four-bar linkage mechanism and a connecting assembly including a first connecting rod and a second connecting rod, adjacent sides of the four-bar linkage mechanism being hinged, the first connecting rod being hinged with the four-bar linkage mechanism, the second connecting rod being rotatably connected with the sliding block; and the first connecting rod being connected with the second connecting rod by a spherical hinge.

7. The stabilization mechanism of claim 6, wherein:
the four-bar linkage mechanism is a double rocker mechanism, the four-bar linkage mechanism including a first rocker, a second rocker, and a mounting rod, the mounting being hinged with the first rocker and the second rocker.

8. A stabilization mechanism of claim 7, further comprising:
a frame, the differential gear set, the first motor, the second motor, and the four-bar linkage mechanism being all mounted on the frame.

9. The stabilization mechanism of claim 8, wherein:
the frame includes a rack, the rack including two plane racks disposed opposite to each other and a connecting beam connecting the two plane racks; and
the differential gear set and the slider-crank assembly are disposed between the two plane racks.

10. The stabilization mechanism of claim 9, wherein:
the plane rack includes a vertical rod and a first horizontal rod and a second horizontal rod respectively connected to two ends of the vertical rod, the first horizontal rod of the two plane racks being connected by one connecting beam, and the second horizontal rod of the two plane racks being connected by another connecting beam.

11. The stabilization mechanism of claim 10, wherein:
the first rocker and the second rocker are spherically hinged with different connecting beams.

12. The stabilization mechanism of claim 10, wherein:
the first side gear, the second side gear, the first motor, and the second motor are mounted on the vertical rod.

13. The stabilization mechanism of claim 9, wherein:
the frame further includes a plane connecting rack, the plane connecting rack including a first rod, a second rod, and an intermediate rod connected between the first rod and the second rod that are disposed opposite to each other, and the first rod and the second rod being connected to the vertical rods of different plane racks.

14. The stabilization mechanism of claim 7, wherein:
the payload assembly includes a mounting base for mounting a payload, the mounting base being fixed on the mounting rod.

15. The stabilization mechanism of claim 14, wherein:
the mounting base includes an annular mounting part and a connecting part connected between the mounting rod and the mounting part.

16. A stabilization mechanism for supporting a payload, comprising:
a differential gear set including a first side gear and a second side gear disposed opposite to each other, and a first planetary gear meshing with the first side gear and the second side gear, the first planetary gear being capable of rotating on its own or revolving around the first side gear and the second side gear;
a first motor connected to the first side gear;
a second motor connected to the second side gear; and
a movement conversion assembly connected between the payload and the first planetary gear for converting a revolution movement of the first planetary gear into a movement of the payload in a first direction, and converting a rotation movement of the first planetary gear into the movement of the payload in a second direction.

17. The stabilization mechanism of claim 16, wherein:
the first direction is perpendicular to the second direction.

18. The stabilization mechanism of claim 16, wherein:
the movement conversion assembly includes a slider-crank assembly, the slider-crank assembly including a crank, a connecting rod, and a sliding block, both ends of the connecting rod being hinged with the crank and the sliding block respectively, and the crank being connected with the first planetary gear.

19. The stabilization mechanism of claim 18, wherein:
a sliding direction of the sliding block is parallel to a rotation axis direction of the first side gear and the second side gear.

20. The stabilization mechanism of claim 19, wherein:
the movement conversion assembly includes a four-bar linkage mechanism and a connecting assembly including a first connecting rod and a second connecting rod, adjacent sides of the four-bar linkage mechanism being hinged, the first connecting rod being hinged with the four-bar linkage mechanism, the second connecting rod being rotatably connected with the sliding block; and the first connecting rod being connected with the second connecting rod by a spherical hinge.

21. The stabilization mechanism of claim 20, wherein:
the four-bar linkage mechanism is a double rocker mechanism, the four-bar linkage mechanism including a first rocker, a second rocker, and a mounting rod, the mounting being hinged with the first rocker and the second rocker.

22. The stabilization mechanism of claim 21, further comprising:
a frame, the differential gear set, the first motor, the second motor, and the four-bar linkage mechanism being all mounted on the frame.

23. The stabilization mechanism of claim 22, wherein:
the frame includes a rack, the rack including two plane racks disposed opposite to each other and a connecting beam connecting the two plane racks; and
the differential gear set and the slider-crank assembly are disposed between the two plane racks.

24. The stabilization mechanism of claim 23, wherein:
the plane rack includes a vertical rod and a first horizontal rod and a second horizontal rod respectively connected to two ends of the vertical rod, the first horizontal rod of the two plane racks being connected by one connecting beam, and the second horizontal rod of the two plane racks being connected by another connecting beam.

25. The stabilization mechanism of claim 24, wherein:
the first rocker and the second rocker are spherically hinged with different connecting beams.

26. The stabilization mechanism of claim 24, further comprising:
the first side gear, the second side gear, the first motor, and the second motor are mounted on the vertical rod.

27. The stabilization mechanism of claim 23, wherein:
the frame further includes a plane connecting rack, the plane connecting rack including a first rod, a second rod, and an intermediate rod connected between the first rod and the second rod that are disposed opposite to each other, and the first rod and the second rod being connected to the vertical rods of different plane racks.

28. The stabilization mechanism of claim 18, wherein:
the crank is fixed on a rotating shaft of the first planetary gear;
the slider-crank assembly further includes a sliding rod cooperating with the sliding block, and an end of the sliding rod is sleeved on the rotating shaft.

29. The stabilization mechanism of claim 21, wherein:
the movement conversion assembly includes a mounting base for mounting the payload, the mounting base being fixed on the mounting rod.

30. The stabilization mechanism of claim 29, wherein:
the mounting base includes an annular mounting part and a connecting part connected between the mounting rod and the mounting part.

31. The stabilization mechanism of claim 16, wherein:
the differential gear set further includes a second planetary gear meshing with the first side gear and the second side gear.

32. A gimbal device, comprising:
the stabilization mechanism according to any one of claims 5-15, or 16-31.

33. The gimbal device of claim 32, further comprising:
a three-axis gimbal.

34. An image capturing device, comprising:
an imaging device; and
the gimbal device according to claim 32 or 33.
